# EUROPEAN PATENT SPECIFICATION

(11) **EP 0 658 404 B1**
(45) Date of publication and mention of the grant of the patent: **12.03.1997**
(21) Application number: 94830559.4
(22) Date of filing: 01.12.1994
(51) Int. Cl.: B25J 9/10, B25J 9/04

(54) **Industrial robot**
Industrieroboter
Robot industriel

(30) Priority: 17.12.1993 IT TO930962
(43) Date of publication of application: 21.06.1995
(73) Proprietor: COMAU S.p.A., 10095 Grugliasco (Torino) (IT)
(72) Inventor: Mauletti, Enrico, I-10093 Collegno (Torino) (IT)
(74) Representative: Notaro, Giancarlo

(56) References cited:
- WO-A-93/13915
- DE-A- 3 808 121
- FR-A- 2 648 378

## Description

The present invention relates to industrial robots, of the type indicated in the pre-characterizing portion of the annexed Claim. A robot of this type is disclosed in WO-A-9 313 915.

The object of the present invention is that of providing an industrial robot of the type indicated above, which is particularly, but not exclusively, to be produced as a robot of small size for carrying out e.g. arc-welding operations or for handling relatively light articles, which has a structure very simple and constituted by a reduced number of parts and which can be assembled with easy and rapid operations.

In order to achieve this object, the invention provides an industrial robot as set forth in the annexed Claim.

Further features and advantages of the invention will become apparent from the following description with reference to the annexed drawings, given purely by way of non limiting example, in which:

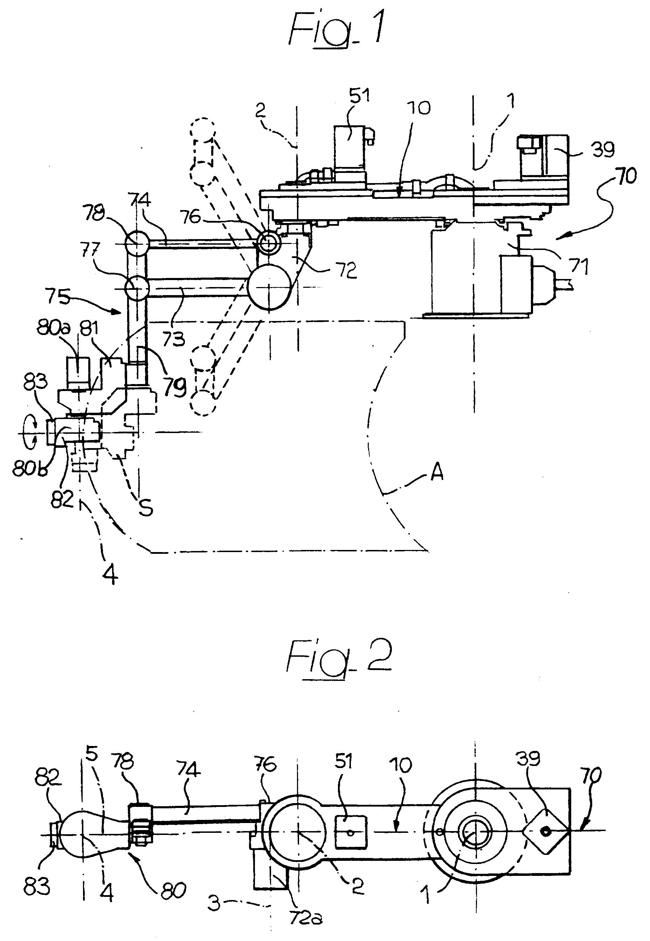

figures 1, 2 are a side view and a plan view of a preferred embodiment of the robot according to the invention.

With reference to these figures, the robot, generally designated by reference 70, comprises a fixed body 71 which rotatably supports around a vertical axis 1 an arm 10 carrying two electric motors 39, 51 with associated reduction gear units at its ends. The arm 10 rotatably supports around a vertical axis 2 a body 72 mounted below the arm 10. The two motors 39, 51 drive the rotation around axes 1, 2. Preferably, the reduction gear units associated therewith are integrated in the structure of arm 10, i.e. this structure acts directly as a casing of the gear reduction transmission, according to what is indicated in a copending application of the same applicant. The rotating body 72 rotatably supports around an axis 3 a lever 73 forming, along with a further lever 74, a parallelogram linkage 75. Lever 74 is articulated to body 72 around an axis 76 parallel to axis 3. The two levers 73, 74 are articulated at 77 and 78 to an arm carrying a wrist 80 comprising a first body 81, a second body 82 rotatably mounted below body 81 around a vertical axis 4 and a flange 83 rotatably mounted onto body 82 around an horizontal axis 5.

Due to the above described structure, the robot according to the invention may reach any point in an extended area whose outline is diagrammatically indicated by A in figure 1. At the same time, the structure of the robot is simple and inexpensive. The robot is very flexible in operation and may move at very high speeds.

The rotation of the parallelogram linkage 75 around axis 3 is driven by an electric motor and reduction gear unit 72a (figure 2), while rotations of elements 82, 83 around axes 4, 5 are controlled by electric motor and reduction gear units 80a, 80b (figure 1). The details of construction of the above mentioned electric motor and reduction gear units are not described herein nor shown in the annexed drawings, since such details may be of any known type and do not fall, taken per se, within the scope of the present invention. Furthermore, the elimination of these details from the drawings renders the latter more easy to understand.

Naturally, while the principle of the invention remains the same, the details of construction and the embodiments may widely vary with respect to what has been described and illustrated purely by way of example, without departing from the scope of the present invention.

For example, the robot may be used with a different orientation from what has been illustrated, i.e. with its axes 1, 2, 4 inclined with respected to the vertical direction.

In figure 1, the dotted line S shows an alternative mounting position of the wrist, in which axis 4 is horizontal and axis 5 is vertical.

## Claims

1. Industrial robot, comprising a plurality of elements (71, 10, 72, 81, 82) articulated to each other around respective articulation axes (1-5) and provided with a plurality of electric motors (39, 51, 72a, 80a, 80b) for driving rotation of each articulated element of the robot around the respective articulation axes (1-5) and a reduction gear unit interposed in the connection between each electric motor and the respective driven element, said robot comprising a fixed body (71), an arm (10) rotatably mounted around a first axis (1) on said fixed body (71), a second body (72) rotatably mounted around a second axis (2), which is vertical, below the arm (10), a parallelogram linkage (75) rotatably mounted around a third horizontal axis (3) on said second body (72) and a wrist (80) carried by said parallelogram linkage (75) and including a first element (81) carried by the parallelogram linkage, and a second element (82) rotatably mounted on the first element (81) around a fourth axis (4), characterized in that said first axis (1) of articulation of said arm (10) to said fixed body (71) is vertical, so that said arm (10) is able to move in a horizontal plane, in that said second body (72) is rotatably supported around said second vertical axis (2) by the structure of said arm (10), and in that said wrist (80) further includes a flange (83) rotatable on the second element (82) around an axis (5) orthogonal to said fourth axis (4).

## Patentansprüche

1. Industrieroboter, mit eine Vielzahl von Bauteilen (71, 10, 72, 81, 82), die zueinander jeweils um Rotationsachsen (1-5) drehbar und mit einer Vielzahl von Elektromotoren (39, 51, 72a, 80a, 80b) als Rotationsantrieb für jedes drehbare Bauteil des Roboters um die jeweiligen Rotationsachsen (1-5) und mit einem in die Verbindung zwischen jedem Elektromotor und dem jeweils davon angetriebenen Bauteil eingesetzten Untersetzungsgetriebe ausgestattet sind, wobei der Roboter ferner einen feststehenden Körper (71), einen drehbar um eine erste Achse (1) an dem feststehenden Körper (71) befestigten Arm (10), einen unten am Arm (10) drehbar um eine zweite vertikale Achse (2) befestigten zweiten Körper (72), ein an dem zweiten Körper (72) drehbar um eine dritte horizontale Achse (3) befestigtes Parallelogramm-Gelenkgetriebe (75) und eine von dem Parallelogramm-Gelenkgetriebe (75) gehaltenes Handgelenk (80) sowie ein von dem Parallelogramm-Gelenkgetriebe gehaltenes erstes Bauteil (81) und ein vom ersten Bauteil (81) drehbar um eine vierte Achse (4) gehaltenes zweites Bauteil (82) aufweist, dadurch gekennzeichnet, daß die erste Achse (1) für die Drehbewegung des Arms (10) gegenüber dem feststehenden Körper (71) vertikal verläuft, so daß der Arm (10) in einer horizontalen Ebene bewegbar ist, daß der zweite Körper (72) von der Armkonstruktion (10) um die zweite vertikale Achse (2) drehbar gehalten ist und daß das Handgelenk (80) außerdem einen Flansch (83) aufweist, der an dem zweiten Bauteil (82) um eine senkrecht auf der vierten Achse (4) stehenden Achse drehbar ist.

## Revendications

1. Robot industriel, comprenant une pluralité d'éléments (71, 10, 72, 81, 82) articulés les uns par rapport aux autres autour d'axes d'articulation respectifs (1-5) et pourvu d'une pluralité de moteurs électriques (39, 51, 72a, 80a, 80b) pour entraîner la rotation de chaque élément articulé du robot autour des axes d'articulation respectifs (1-5) et une unité de réduction à engrenages interposée dans la connexion entre chaque moteur électrique et l'élément entraîné respectif, ledit robot comprenant un corps fixe (71), un bras (10) monté en rotation autour d'un premier axe (1) sur ledit corps fixe (71), un second corps (72) monté au-dessous du bras (10) en rotation autour d'un second axe (2) vertical, un mécanisme à parallélogramme (75) monté en rotation autour d'un troisième axe horizontal (3) sur ledit second corps (72) et un poignet (80) porté par ledit mécanisme à parallélogramme (75) et comprenant un premier élément (81) porté par le mécanisme à parallélogramme, et un second élément (82) monté en rotation sur le premier élément (81) autour d'un quatrième axe (4), caractérisé en ce que ledit premier axe (1) d'articulation dudit bras (10) sur ledit corps fixe (71) est vertical, de sorte que ledit bras (10) est capable de se déplacer dans un plan horizontal, en ce que ledit second corps (72) est supporté en rotation autour dudit second axe vertical (2) par la structure dudit bras (10), et en ce que ledit poignet (80) inclut en outre une bride (83) en rotation sur ledit second élément (82) autour d'un axe (5) orthogonal audit quatrième axe (4).
